# EUROPEAN PATENT SPECIFICATION

(11) **EP 1 477 770 B1**
(45) Date of publication and mention of the grant of the patent: **15.04.2015**
(21) Application number: 03010620.7
(22) Date of filing: 12.05.2003
(51) Int. Cl.: G01C 21/36

(54) **Method to assist off-road navigation and corresponding navigation system**
Verfahren zur Unterstützung der Offroad-Navigation und entsprechendes Navigationssystem
Procédé d'assistance pour la navigation tout-terrain et système de navigation correspondant

(43) Date of publication of application: 17.11.2004
(73) Proprietor: Harman Becker Automotive Systems GmbH, 76307 Karlsbad (DE)
(72) Inventor: Brülle-Drews, Christian, 22159 Hamburg (DE); Schirmer, Hartmut, 25421 Pinneberg (DE)
(74) Representative: Grünecker Patent- und Rechtsanwälte PartG mbB

(56) References cited:
- WO-A-03/040655
- DE-A- 10 146 115
- US-A1- 2003 060 971

## Description

The invention relates to a method and a navigation system to assist navigation in an off-road area for which no digitized road information is available.

Since the upcome of satellite navigation data, navigation systems, especially for cars, are getting more and more used. Usually, those navigation systems receive position data from a device based on the global positioning system (GPS) technology.

The user of a navigation system communicates the destination he wants to reach to the system and eventually also enters further waypoints to which he wants to travel on his way to his final destination. A waypoint is a navigation point (preferably, given by its coordinates) determined by a user or a system. Based on digitized road information comprising road data and/or topographical data in digitized form and usually uploadable into the system, the navigation system calculates a route and assists the user in finding the right way to the waypoints and the final destination. For instance, in the case of a car navigation system, the navigation system tells the driver which road he should drive on and where he has to change onto another road. The navigation systems usually employs screens to provide the information in a graphical way, but systems do also exists which provide acoustic information. Usually, these navigation systems assist the user very well as long as he is situated in an area where digitized road information with all the necessary information is available in the memory of the navigation system.

However, as soon the user is situated in an area where no digitized road information is available to the navigation system, the information given to the user is greatly reduced. In this case, the navigation systems provide the information only on a screen. The information is given in form of positional data of the current position and/or the final destination, but also directional information in form of arrows showing the direction to the final destination may be provided.

US 2003/0060971 A1 teaches a navigation method and system, wherein a user is directed to travel to a next waypoint and a new path to this next waypoint is generated when the user reaches a predetermined radius around a target waypoint.

Off-road areas in the sense of the invention, i.e. areas for which no digitized road information is present, are in fact not limited to areas with no roads at all, like deserts, but also represent areas in general for which up to now no digitization of road maps has been done. They can also be areas which are unstructured, like e.g. large parking places. Especially in cases when the user of the navigation system finds himself in unknown cities for which no digitized road information is available or for which the navigation system has no digitized information stored, it becomes very important to provide this user with the right information so that he can find his way in this complex situation without watching repeatedly the screen of his navigation system.

It is, therefore, the problem underlying the invention to provide a navigation method and a navigation system that provides the user with sufficient information without forcing him to draw off his attention from the route, whenever he is situated in an off-road area.

This problem is solved by the method according to appended claim 1 and the navigation system according to appended claim 11.

Accordingly, a method is provided to assist navigation in an area for which no digitized road information is present comprising the steps of:
providing at least two waypoints to a navigation system, which define a track,
generating navigation information in the navigation system, based on the at least two waypoints and current position data available to the navigation system, and
outputting at least a part of the navigation information in an acoustic, in particular voice-like, way.

In the absence of digitized road information containing information, for example, on road data in or on the topography of an area, navigation information is determined based on the current position of the user and the waypoints he wants to reach. If the user is not familiar with the area he is traveling in, especially in large cities with dense traffic, providing him relevant navigation information in an acoustic way, so that he is not forced to draw off his attention from the traffic surrounding him, supports the user in reaching his final destination in a quick and safe manner.

In this first embodiment of the invention, at least two waypoints are provided. The method can comprise a further step of selecting at least one waypoint for which navigation information is generated and acoustically outputted, the at least one waypoint being selected out of the at least two provided waypoints. This selection of waypoints is particularly important if a whole set of waypoints is provided. For example, in the case of what is generally called tracking or back-tracking navigation, positional data is essentially continuously stored, whereby the succession of the waypoints creates a track. In back-tracking, the user can again follow this track, either in the same direction as originally or in the opposite direction. For both cases, it is of no importance whether the track has been recorded by the same user or if the user follows the track of someone else. However, in back-tracking, it is sometimes not of major importance to follow the track exactly. Only certain waypoints, which are part of the track and which might have a certain importance to the user, like for instance waypoints at which it is known that a road has to be changed or that there is a gas station, a restaurant or a hotel, can be considered as being relevant. It is therefore advantageous to be able to select out of a number of predetermined waypoints those waypoints the user wants to reach.

According to the first embodiment, at least two waypoints are provided and out of the at least two provided waypoints, at least one special waypoint is identified by the navigation system, each special waypoint having predetermined characteristics or being at a predetermined distance in space or in time from another waypoint having the predetermined characteristics, and wherein navigation information is generated and acoustically outputted for each special waypoint. In the case of the tracking and back-tracking application, for example, it might not only be important to inform the user of the navigation system about the waypoints he wants to pass by. There may also be waypoints on the track with special characteristics. Those special characteristics can be, for example, places on the track where a sharp turn, either to the left or to the right, occurs. Such points can be identified by applying mathematical analyzing methods to the track. For example, to identify points of sharp deviations, the derivatives of the track as a function of the baseline, which is the shortest distance between two waypoints, could be calculated and analyzed. The special waypoints, stemming from such an analysis are important to enable a user to follow the track.

According to the first embodiment, the method further comprises the step of deciding according to a predetermined criterion whether the navigation information which is to be outputted in the navigation information outputting step is given with respect to the following waypoint or the following special waypoint or with respect to both. This criterion is, for example, the comparison of the distance to the next special waypoint and the next waypoint. If the user has reached a location at which the navigation system is supposed to announce navigation information concerning the next waypoint, but at the same time, a special waypoint is closer on the track, it may be preferable that the navigation system announces navigation information for the next special waypoint also. If, on the other hand, there is no special waypoint on the track towards the next waypoint, there is no need to give information about the following special waypoint which will be reached after reaching the next waypoint.

In a preferred embodiment of the invention, the acoustic outputting of the navigation information can take place at at least one predetermined distance in space or in time to the following waypoint or the following special waypoint. Thereby, the predetermined distance can be different for a waypoint and a special waypoint and/or there can be more than one distance at which information is outputted. As an example, navigation information could be given at a waypoint, thus the predetermined distance being zero and also 500m before arriving at the waypoint. The predetermined distance can be provided externally to the navigation system but also default values may be stored in the navigation system.

According to a further preferred embodiment, the distance in time can be predetermined using an estimated velocity and the distance between the current position and the following waypoint or special waypoint. In other words, navigation information is provided at a certain time prior to arriving at a (special) waypoint. This time can be calculated by the system, for example, estimating a velocity using an average speed or the current speed of the systems and thereby calculating an estimated arrival time corresponding to the predetermined time interval. Alternatively, also a default value can be stored to be used as estimated velocity.

According to another preferred embodiment, the step of generating navigation information and/or the step of outputting at least a part of the navigation information can be repeated within predetermined time or distance intervals. For example, the navigation information can be output regularly, every time a predetermined distance has been covered or a predetermined time has elapsed.

By providing the navigation information at predetermined locations or at predetermined times, the user is assisted at locations where or times when he needs further information to find his way, and this without that the user has to think about it and to expressively ask for the navigation information.

In a further variant of the invention, the method can further comprise the step of acoustically outputting navigation information on request. Thereby, whenever the user feels that he needs to know more about the next waypoint or the next special waypoint, the navigation system provides the necessary information. Thereby, the request can be either manually inputted or by acoustic means.

In an advantageous manner, the step of generating navigation information can comprise the step of updating the navigation information using updated position data. This updating step can be performed regularly and/or if the position of the navigation system is altered. To provide precise navigation information to the user, it is important that the navigation system provides the user with navigation information which is based on his current position and not a former position.

In a further preferred embodiment, the acoustic outputting step can comprise acoustic outputting of navigation information comprising current position data and/or a distance to a waypoint or special waypoint and/or a direction to the waypoint or the special waypoint and/or deviation information and/or an estimated arrival time at the waypoint or the special waypoint and/or waypoint characteristics. This kind of information can be computed even for areas without digitized road information and nevertheless assists the user of the navigation system to find his way. Deviation information is information on the distance and/or direction between the current position and a predetermined route such as a track or baseline between two (special) waypoints, for example. Special waypoint characteristics might include information about points of special interest, like hotels, restaurants or gas stations.

In a further advantageous manner, the acoustic outputting of the navigation information of the direction to the waypoint or the special waypoint can be given relative to a predetermined direction, particularly, relative to the north and/or relative to a last moving direction of the navigation system. Depending on the preferences of the user, the one or the other way of announcing a direction is preferred. Thus giving the user such a choice further improves the quality of navigation assistance given by the method of the invention.

In a further preferred embodiment, during the navigation information generating step, the distance to the following waypoint or following special waypoint can be determined as the shortest distance and/or the distance following a track to the next waypoint. In the case of tracking or backtracking navigation exists the possibility to calculate the distance between two waypoints via two ways. One possibility is the shortest distance, the so-called baseline, between the current position and the next waypoint. However, in most cases, it is not possible to move in a straight line to the next waypoint, but there will be turns that will have to be performed and thereby the current distance towards the next waypoint is longer than the baseline. In the case that track data is available in the navigation system, this data can be used to calculate a distance, which is closer to the one that will be actually covered by the user. Again, by giving the user the choice which distance he wants to know about, the quality of navigation assistance is enhanced.

In the case the user requests that the navigation system provides him with navigation information, it is preferable that the user has the possibility to ask for both types of information, for the special waypoint and the waypoint or that the system itself decides if it is preferable to give information about the next waypoint or the next special waypoint. If, for example, a special waypoint and a waypoint are close together within a predetermined distance, it might be interesting for the user to know about both, on the other hand, if those two points are far apart, there is no need to give too much information, which might confuse the user. In this case information shall preferably be given only for the following waypoint or special waypoint, depending on which is closer.

The invention further provides a computer program product directly loadable into an internal memory of a digital computer comprising software code portions for performing the steps of one of the methods described above.

The invention also provides a computer-programmed product stored on a medium readable by a computer system comprising computer readable program means for causing a computer to perform the steps of one of the previously described methods

Furthermore, the invention provides the use of one of the methods as described above in a navigation system mounted into vehicle, in particular, a car.

In addition, the invention provides a navigation system, in particular, for performing one of the previously described methods, comprising
- input means for inputting data, in particular, comprising a navigation system position and/or at least two waypoints which define a track,
- data storage means for storing data, in particular, a position and/or at least two waypoints,
- data processing means for processing data and for providing navigation information, and
- communicating means for communicating navigation information,
wherein the communicating means is designed such that acoustic navigation information is outputted when the navigation system is situated in an area for which the navigation system has no digitized road information.

In the absence of digitized road information containing information, for example, on road data in or on the topography of an area, navigation information is determined based on the current position of the user and the waypoints he wants to reach. If the user is not familiar with the area he is traveling in, especially in large cities with dense traffic, providing him relevant navigation information in an acoustic way, so that he is not forced to draw off his attention from the traffic surrounding him, supports the user in reaching his final destination in a quick and safe manner.

According to this embodiment, at least two waypoints are inputted and the navigation system further comprises waypoint selection means to externally select waypoints out of the inputted waypoints.

The data processing means further comprises special waypoint identification means for identifying at least one special waypoint having predetermined characteristics.

The data processing means further comprises decision taking means to decide if the communication means acoustically communicates the navigation information with respect to a selected waypoint or a special waypoint or with respect to both.

The invention further provides a vehicle, in particular, a car, comprising one of the previously described navigation systems.

In the following, examples of the inventive method to assist navigation in off-road areas are described with respect to the figures.
Fig. 1 shows a flow chart for off-road waypoint navigation,
Fig. 2 shows the navigation information on request step of the waypoint navigation method shown in Fig. 1,
Fig. 3 shows schematically the principle of off-road waypoint navigation as described in Fig.1 and Fig. 2,
Fig. 4 shows a flow chart for an off-road backtracking navigation according to the present invention,
Fig. 5 shows the navigation information on request step of the off-road backtracking navigation method shown in Fig. 4, and
Fig. 6 shows schematically the principle of backtracking navigation as described in Fig. 4 and Fig. 5.

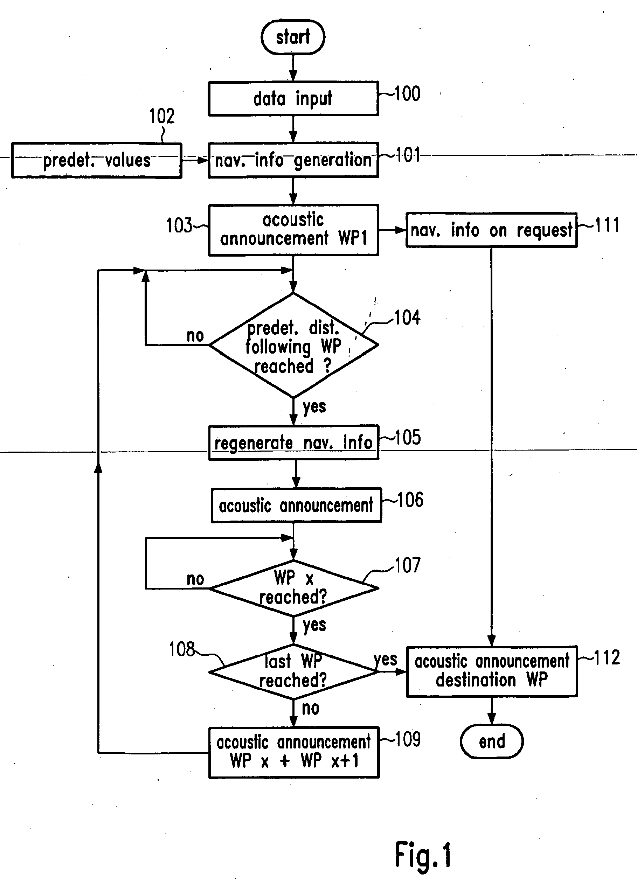

Fig. 1 shows an illustrative example, not being part of the invention, of a navigation method applied to waypoint navigation. In waypoint navigation at least one waypoint is defined by the user by providing the geographical coordinates. The waypoint navigation might concern navigation in an area without roads, like the desert, or navigation in areas with a road network, but where no digitized road information, containing the road information, is available to the navigation system.

After starting the navigation system, which, for example includes the step of initialization of the system, the process step 100 concerns data inputting, which can be done by manually or orally inputting coordinates to the navigation system or by clicking on waypoints on a map. It may also be possible to upload data information from a storage medium like a CD-ROM. In addition to providing the waypoint coordinates, the user also may have the possibility to choose what kind of navigation information he wants to receive from the navigation system. The navigation information that may be outputted by the system comprises current position data and/or distance to a defined waypoint and/or the direction to the waypoint and/or an estimated arrival time at the waypoint. Furthermore, it is possible to announce waypoint characteristics like, for example, that at a special waypoint there is a hotel, a restaurant or a gas station. Further, the user may have the possibility to choose the distance from the waypoints at which he wishes to receive navigation information. It is also an option that this navigation information may be given to the user at a certain time prior to arriving at the following waypoint.

In the next step 101, navigation information is generated based on the inputted data 100 and on further predetermined values that were stored in the navigation system during step 102. The generation of navigation information is also based on current position data that the system receives, for example, from a GPS system. In step 103, the navigation information that the user wishes to receive or which the system announces as a default if the user did not pronounce a wish is communicated acoustically, e.g. in a voice-like manner, to the user. Thereby, the outputted navigation information concerns the waypoint the user wants to travel to next, which is waypoint WP1.

In step 104 it is checked whether the user has reached the predetermined distance at which navigation information about the following waypoint should be acoustically announced to the user. Actually, the system waits until the predetermined distance is reached to proceed to step 105 at which, based on the current position data of the navigation system, navigation information for the following waypoint is regenerated. Then, in the following step 106, the navigation information is acoustically announced to the user.

In step 107, it is then checked whether the waypoint WPx has been reached or not. If not, the step is repeated until the condition is met. Then it is checked whether the reached waypoint corresponds to the last waypoint, i.e. the final destination, which has been inputted in step 100. If the reached waypoint does not correspond to the last waypoint, the next step 109 is performed. Therein, the navigation system communicates navigation information about the waypoint at which the user is situated (WPx) and also gives information about the following waypoint (WPx+1), which the user wants to reach next. In the following the steps 104 - 109 are repeated until it has been identified in step 108 that the last inputted waypoint has been reached. In that case, the navigation system proceeds with step 110 and provides an acoustic announcement of the navigation information concerning the destination waypoint.

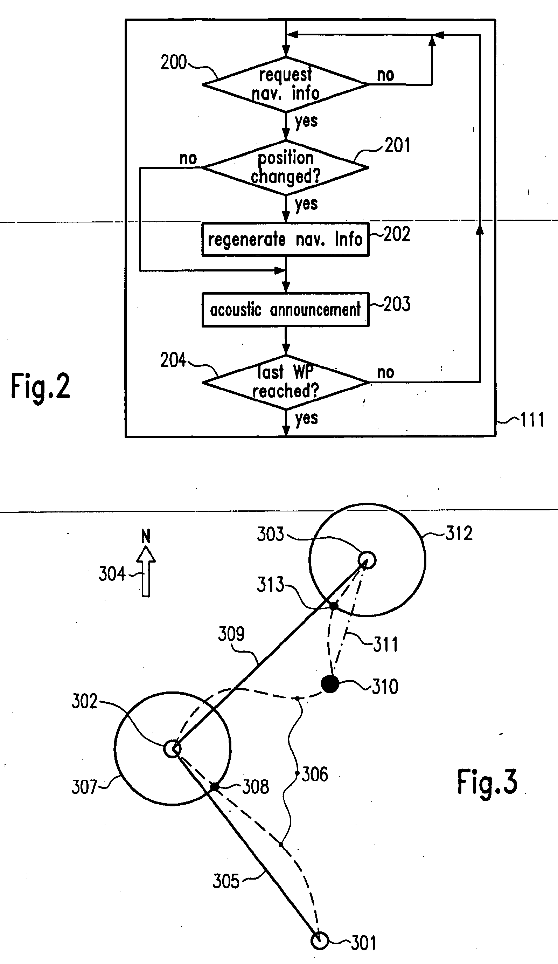

In parallel to step 104 - 109, the user has the possibility to request navigation information whenever he wishes to. The details of the navigation information on request module 111 are explained further down with respect to Fig. 2.

The method described uses acoustic announcements of the information, but it is also possible to additionally provide the navigation information on a screen being part of the navigation system. Furthermore, it may also be foreseen that the announcements are done in a desired language, using a female, a male voice or a computer generated voice.

Fig. 2 shows a flow chart of the process steps that are part of the navigation information on request module 111 shown in Fig. 1. The steps 200 - 204 are performed in parallel to the process steps 104 - 109.

In step 200, the navigation system is in a request awaiting mode. This request can be done manually, for example by pushing a button on the navigation system or acoustically if the navigation system comprises speech recognition means. At the moment the user of the navigation system requests the navigation system to provide him with navigation information, it is checked in the next step 201 if the current position of the navigation system is changed with respect to the last announcement. If this is the case, process step 202 is performed in which the navigation information is regenerated taking into account the updated current position and also which of the inputted waypoints (step 100 of Fig. 1) the user will reach next. In step 203, the navigation information as requested is acoustically announced. If in process step 201 it has been identified that the position of the navigation system has not changed, no new navigation information needs to be computed and the system announces the information as announced earlier. In process step 204, it is decided whether the last waypoint, the final destination, has been reached. If this is not the case, the process repeats steps 200-204. If the last waypoint has been reached, the process continues with step 110 as shown in Fig. 1.

Fig. 3 shows an example of an application of waypoint navigation in an off-road area following the method described in Fig. 1 and Fig. 2. From the starting point 301, the user wants to travel to waypoint 302 from where he wants to travel to waypoint 303, the final destination. After inputting the necessary data into the navigation system (step 100) and after the navigation information generating step (step 101), the navigation system provides the user with a first announcement (step 103) before moving towards waypoint 302. As an example, the message announced at the starting point 301 could be: "Waypoint 1 is 5km to your left in the direction northwest". In waypoint navigation, the distance to the next waypoint is calculated on the so-called baseline 305 which corresponds to the shortest distance between the two waypoints. The message "to your left" is thereby based on the current moving direction of the navigation system with respect to the following waypoint. In the figure, the direction of north is indicated by arrow 304.

With the announced navigation information for waypoint 302, the user knows how to move towards waypoint 302. As the exact topography towards waypoint 302 is not known, due to the lack of digitized road information, it is usually not known whether a straight line towards the waypoint can be followed. Therefore, the actual path the user will take towards waypoint 302 might deviate from the baseline 305. In the figure, the actual path the user will take towards the waypoints is drawn in a dotted line 306.

The circle 307 round waypoint 302 corresponds to the predetermined distance at which the user receives navigation information for waypoint 302. At point 308 the user actually arrives at that predetermined distance and receives for example the following message: "Waypoint 1 is 0.4km in front of you in the direction northwest" (steps 104 to 106). In a variant, the information given could also be time based like: "Waypoint 1 is reached in approximately 5 minutes and is situated in front of you in the direction northwest". The time at which this announcement is done, may, as an example, be calculated as a function of the average speed of the user.

At the moment the user arrives at waypoint 302 or at least in the proximity of waypoint 302, depending on the accuracy of the positioning system, the navigation system provides acoustic information about the reached waypoint 302 and also navigation information about the following waypoint 303, the final destination in this example. Here, the acoustic announcement may have the form of: "You have reached waypoint 1, this is the last gas station before final destination. Waypoint 2 is at 70km to your right in the direction northeast" (steps 107-109). In this example, the message contains waypoint characteristics providing the user with additional information like a gas station or a hotel or alike. Like for the distance between the starting point 301 and waypoint 302, the distance between waypoint 302 and 303 is given as the shortest distance, corresponding to the baseline 309. As the user might not be able to follow the direct line 309 towards the final destination 303, he might deviate from that line, following the dotted line 306.

At point 310, the user requests further navigational information from the navigational system (module 111 and step 200). As compared to waypoint 302, the user has changed his position, the navigation information will be recalculated based on current position 310 (step 201 and 202). The navigation system will provide, as an example, the following acoustic driver recommendation: "Waypoint 2 is 700m in front of you in the direction north northeast" (step 203), thus the user can adjust his way accordingly. Like for the distances 305 and 309, the distance between point 310 and the waypoint 303 is based on the shortest possible distance corresponding to the baseline 311.

The circle 312 around waypoint 303 depicts again the predetermined distance at which acoustic information is provided to the user without that the user has to request this information. At point 313 (step 104), the user will therefore receive, for example, the following message: "Waypoint 2, your final destination, is 400m to your right in the direction northeast" (step 110).

In this example, the predetermined distance for the waypoints 302 and 303 as visualized by the circles 307 and 312 is the same. However, it may also be of interest to determine different distances for different waypoints, or more than one predetermined distance might also be defined so that the user receives more than once navigational information on his way to the next waypoint. In a further variant, the navigational information may also be given regularly, either in time or in space.

This navigational method can be used by all sorts of users, but is in particular interesting for an application in vehicles, like cars.

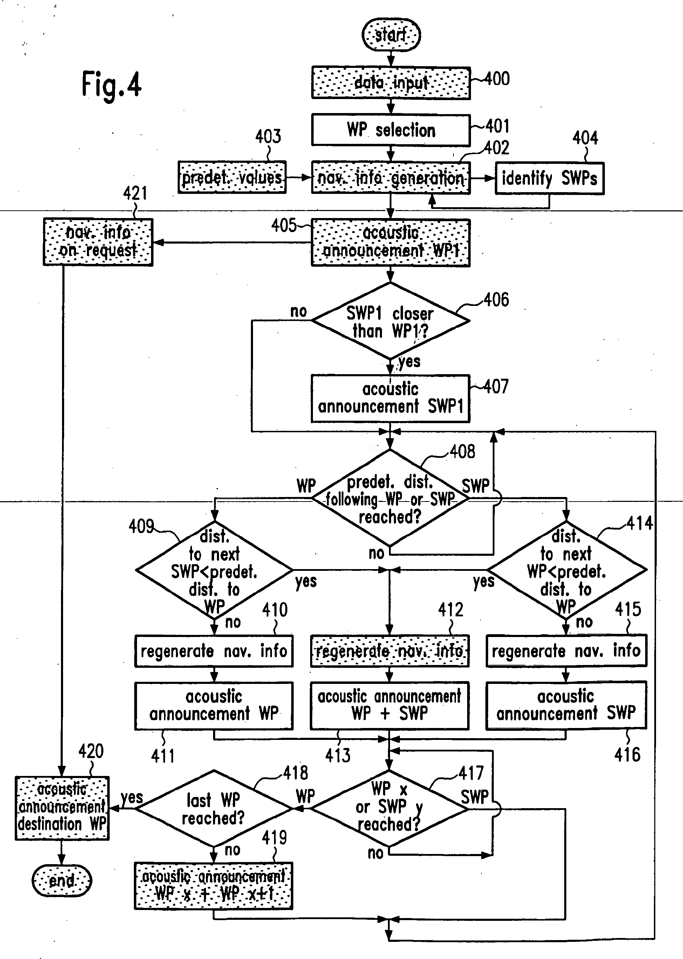

Fig. 4 shows a flow chart describing an example of the invention applied to backtracking navigation in an off road area. The gray underlined process steps are equivalent to the ones of the waypoint navigation as described with respect to Fig. 1 - 3. In backtracking navigation, a previously traveled track is traveled through again, either in the same way or in its opposite direction.

Step 400 concerns the data inputting. This step corresponds to step 100 of Fig. 1. However, in backtracking navigation, track information, in the form of a nearly continuous series of waypoints, has to be provided to the navigation system. This can either be done by manually inputting the geocoordinates of all the waypoints, defining the track, or the track can be loaded into the memory of the navigation system, whereby the data may be stored on a CD-ROM, a floppy disc or the like. It is also a possibility that the navigation system regularly or continuously stores position data of waypoints the user moves by. In this way, a track is defined. If the user then wants to move back on the same way, the already stored track data will be used.

The next step 401 consists in making a waypoint selection to identify those waypoints of the track the user wants to reach. Step 402 corresponds to step 101 of Fig. 1, wherein navigation information is generated, using the data inputted in step 400, the predetermined values that are already stored in the system (step 403) and positional data which the system receives from a position detection system like a GPS system. In addition, special waypoints are identified in step 404 and fed back to the navigation information generation step 402. The special waypoints correspond to waypoints on the track at which important waypoint information can be or should be given to the user, like for example positions on the track at which sharp turns occur.

In the following step 405, the navigation information is acoustically announced to the user. Furthermore, in step 406 it is checked whether on the way to the first waypoint also a special waypoint is situated. If this is the case, in step 407 the navigation system also acoustically announces navigation information concerning this special waypoint. If however, no special waypoint is situated on the way towards waypoint 1, step 407 is skipped and the next step 408 is performed accordingly.

In step 408, it is checked whether the predetermined distance towards the following waypoint (predetermined distance A) or the following special waypoint (predetermined distance B) has been reached. Actually, this step is repeated until the predetermined distance A or B is reached and at the same time it is decided whether the distance A with respect to a waypoint or the distance B with respect to a special waypoint has been reached.

If the predetermined distance A of the following waypoint has been reached, it is checked in step 409 whether the distance to the next special waypoint is smaller than the predetermined distance A to the waypoint. If this is not the case, step 410 consists in regenerating new navigation information for the next waypoint, based on the current position data received from the GPS. This navigation information is then acoustically announced in step 411.

If in step 409 the distance to the next special waypoint has been identified to be smaller than the predetermined distance A to the next waypoint, the method proceeds with step 412. Therein, navigation information is regenerated for the next special waypoint and the next waypoint based on current position data. In step 413 navigation information is then acoustically announced for both waypoints, the waypoint and the special waypoint.

If at step 408 it has been identified that the predetermined distance B to the next special waypoint has been reached, the process continues with step 414. During this step, it is checked whether the distance to the next waypoint is smaller than the predetermined distance A to the next waypoint. If this is not the case, navigation information is regenerated in process step 415 for the next special waypoint based on current position data. In process step 416, this navigation information is then acoustically announced to the user.

If, however, it has been identified that in step 414 the distance to the next waypoint is smaller than the predetermined distance A to the waypoint, process steps 412 and 413 are repeated.

In the following, step 417 is repeated until the waypoint or the special waypoint has been reached. If the special waypoint has been reached, the process continues with steps 408-416. If the waypoint has been reached, the process proceeds with step 418, in which it is decided whether the reached waypoint corresponds to the last waypoint, the final destination, or not.

If the final destination has not been reached, the process continues with step 419, in which the navigation information about the waypoint is acoustically outputted. Furthermore, waypoint information for the next waypoint on the track is also given. If a further special waypoint is on the way to the following waypoint, navigation information shall also be given for this point. After process step 419, the process continues again with step 408.

If in step 418 it has been identified that the last waypoint has been reached, the process proceeds with step 420 in which information about the destination waypoint is acoustically announced.

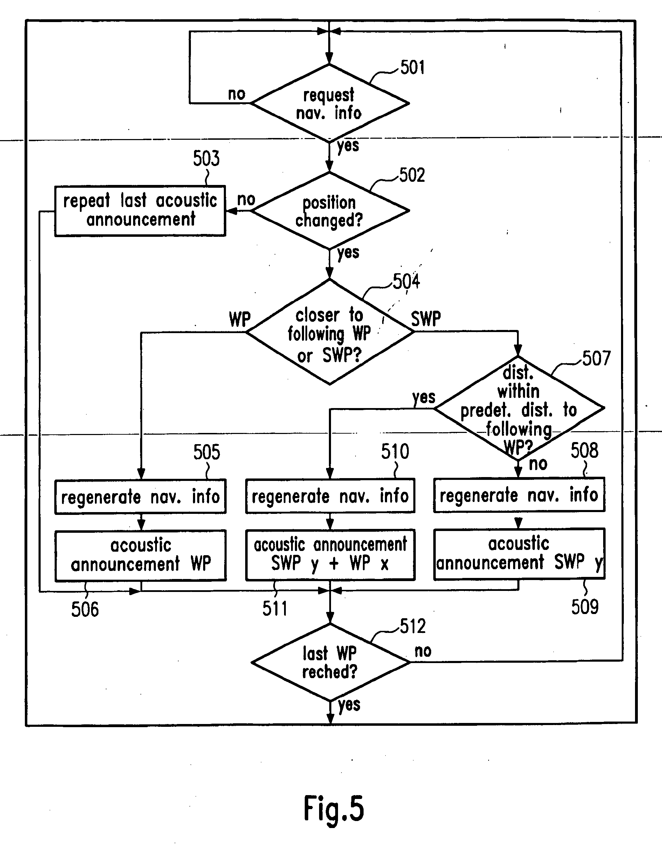

In parallel to the automatic navigation information announcement of steps 405, 407, 411, 413, 416, 419 and 420, it is also possible that the user receives navigation information from the navigation system on request, corresponding to the process module 421 which will be explained in detail in Fig. 5.

In the described example of the inventive method, it is assumed that the predetermined distance A has been chosen to be larger than the predetermined distance B, which leads to the decision criteria of steps 409 and 414. In another example, it is of course also possible to decide A to be smaller than B leading to modified decision criteria which can be easily identified by the skilled person.

In backtracking or tracking navigation, the distance from the user to the next waypoint or special waypoint is usually calculated according to the track, as it is the one which will be covered by the user, but it is also possible to calculate the shortest distance instead.

Fig. 5 shows a flow chart of the process steps which are part of the navigation information on request module 421 as shown in Fig. 4. The steps 501 to 512 are performed in parallel to the steps 405 to 419.

Step 501 is repeated until the system receives a request for navigation information from the user. In the following step 502, the navigation system checks whether its position has been changed with respect to the last announcement that has been provided to the user. If the position has not been changed, in step 503 the system gives the same navigation information as has been provided during the last announcement given. If the position is different in step 504 the system checks whether is it closer to the following waypoint or to the following special waypoint.

If the navigation system is situated closer to the following waypoint, navigation information is regenerated in step 505 for this waypoint, based on current position data. This navigation information is then acoustically announced in process step 506.

If in step 504 it has been identified that the user is closer to the following special waypoint, then, the process continues with step 507 wherein it is checked if the navigation system is situated at a distance to the following waypoint which is smaller than the predetermined distance A. If this is the case, the navigation system generates navigation information for both the next special waypoint and the next waypoint based on the current position. This navigation information is then announced in step 511. If, however, the distance is bigger than the predetermined distance A, the process continues with step 508 in which navigation information is regenerated only for the following special waypoint and announced in the step 509.

In step 512, it is detected whether the last waypoint has been reached or not. If this is not the case, steps 501 - 512 are repeated. If, however, the last waypoint has been reached, the process continues with step 420 as shown in Fig. 4.

In a variant, it is also possible that the user requests navigation information only for the following waypoint or only for the next special waypoint. In such a case, only the requested kind of information will be provided.

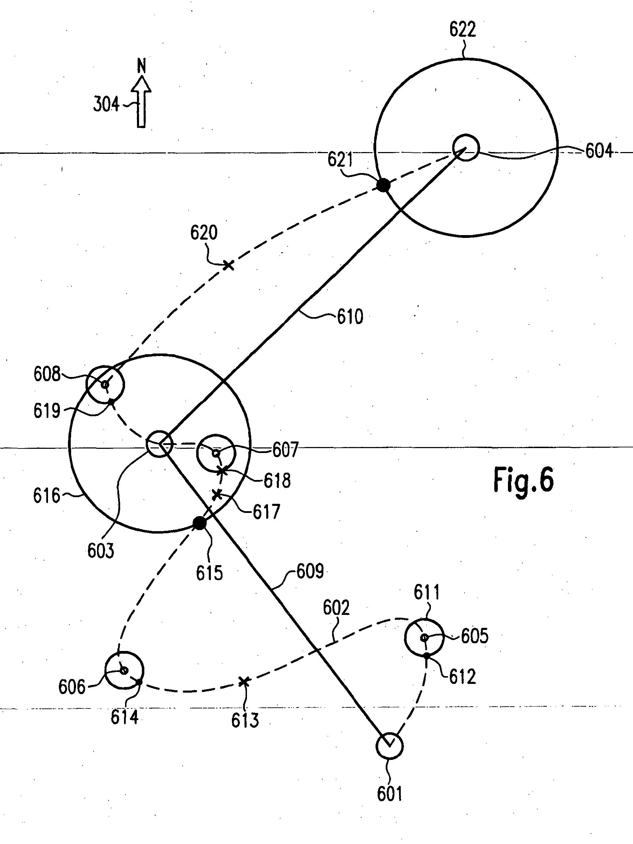

Fig. 6 shows an example of the application of backtracking navigation in an off-road area following the method described in Fig. 4 and Fig. 5. From the starting point 601, the user wants to follow the predetermined track 602, shown in a dashed line, to waypoint 603 and further on to waypoint 604, corresponding to the final destination. As explained earlier, the track data defining track 602 can be provided by different means, including uploading track waypoint data from a storage medium, inputting it manually or by driving back a previously recorded track (steps 400, 401, 403).

By analyzing the topography of the track (step 404), the navigation system will identify four special waypoints 605, 606, 607 and 608 corresponding to points on the track where sharp turns occur. One method to identify those special waypoints could be to compute the derivative of the track as a function of the direct distance, the baselines 609 and 610, between the waypoints 601, 602 and 603.

After inputting the necessary data into the navigation system (step 400) and the navigation information generating step (step 402), the navigation system provides the user with the first announcement before moving towards waypoint 603 (step 405). As on the way towards waypoint 603, special waypoints 605, 606 and 607 are present, additional navigation information is also computed for the next special waypoint 605 and announced together with the information concerning waypoint 1 (step 407). As an example, the message announced at waypoint 601 could be: "On your way to waypoint 1 at 20km, a first special waypoint is situated 3km in the direction north northeast". As the user, following the track, usually will not travel via the shortest way towards the next waypoint, it is preferable to announce the distance to the next waypoint based on the track. With this information, the user can start to follow the track in the direction of the first special waypoint 605.

The circle 611 around special waypoint 605 corresponds to the predetermined distance B at which the user will automatically receive navigation information concerning this special waypoint. Thus, when the user arrives at point 612, he will receive the following message: "The special waypoint 1 is 400m in front of you in the direction north northeast". As waypoint 1, 603, is still far away, no information will be given for the following waypoint at this location (steps 408, 414 - 416). The radius of the circle 611 corresponding to the predetermined distance B may either be given by the user or may be a default value stored in the navigation system. In a special case, the distance B can also be zero, which means that navigation information would be provided at the location of the special waypoint.

The information given at point 612 should furthermore contain information about what the user has to do at special waypoint 605, for example: "At special waypoint 1, turn left in direction west towards special waypoint 2 which is at 10km,".

On his way to special waypoint 2, 606, the user requests further navigational information at point 613 (step 501). At this point, the navigational system will regenerate navigational information and announces the following message: "Special waypoint 2 is 3km in the direction west northwest" (step 508 and 509).

At point 614, the user is at the predetermined distance B with respect to special waypoint 606 and will receive a similar message as at special waypoint 612, however, with navigation information with respect to special waypoint 606.

At point 615, the user is at the predetermined distance A with respect to waypoint 603, the predetermined distance being shown by the circle 616 around waypoint 603. At this position, due to the fact that on his way to waypoint 603 there is a further special waypoint 607, the navigation information given to the user will contain information about both waypoints (step 409, 412 and 413). The message will be: "On your way to waypoint 1, which is at 2km, you pass special waypoint 3 at 1.5km in the direction north northeast".

At point 617, the user requests further navigation information. At this position, the system will provide information concerning the next special waypoint 607 but also about the next waypoint 603, as at point 617 the user is within the predetermined distance A to the following waypoint 603 (step 507, 510 and 511).

At point 618, the user is at the predetermined distance B with respect to special waypoints 607, but also within the predetermined distance A with respect to waypoint 603. Therefore, the navigation system will generate navigation information for both the special waypoint 607 and waypoint 603 (steps 408, 414, 412 and 413).

At waypoint 603, an acoustic announcement is provided to the user containing information about the waypoint itself and also about the following waypoint 604 and the special waypoint 608 which is on the track towards waypoint 604 (step 419).

At point 619, the user reaches the predetermined distance B concerning special waypoint 608 and receives navigation information for this special waypoint similar to the information received at special waypoint 605 or 606 (steps 414 - 416). After passing special waypoint 608 where the user turns to the right in the direction of the final destination waypoint 604, the user makes another request for navigation information at point 620. At that position, the following waypoint is the final destination waypoint 604. For this waypoint, navigation information will be generated (steps 505 and 506). Hereby, the announcement will be: "Waypoint 2, the final destination, is 5km in front of you in the direction east northeast".

At point 621, the user is at the predetermined distance A from the final destination 604, the predetermined distance A again is shown by a circle 622 around the final destination point 604. At position 621, the user receives the message: "Waypoint 2, the final destination, is 500m ahead of you in the direction east northeast" (408-411).

When the user arrives at the final destination point 604 or in the vicinity of it, depending on the accuracy of the system, he receives the message: "You have reached the final destination. A hotel can be found to your right" (step 420).

In this example, the user follows more or less exactly the track. However, it is also possible that there are slight deviations from the predetermined track, however, the special waypoints and the waypoints will still be positions on the track that the user wants to pass by. If the user deviates from the track, it is also possible that a message concerning the deviation (for example, after passing a threshold deviation) is output, e.g.: "The deviation from the track is 200m. For returning to the track, please turn to the right."

Also in this embodiment, the predetermined distance is always defined as the shortest distance towards the waypoint or the special waypoint, depicted as circles 616 and 622 around the waypoints, it is, however, also possible that the predetermined distance is calculated with respect to the track. Then, the locations at which information will be given differ from the ones that have been described in the example of Fig. 6.

## Claims

1. Method to assist navigation in an area for which no digitized road information is present comprising the steps of:
providing (400) at least two waypoints to a navigation system, which define a track,
identifying (404) out of the at least two provided waypoints at least one special waypoint by the navigation system, wherein each special waypoint has predetermined characteristics,
**characterized by**
generating and outputting (402, 405) navigation information with respect to a first waypoint along the defined track and, if a first special waypoint is closer to a current position of the navigation system than the first waypoint, additionally generating and outputting (406, 407) navigation information with respect to the first special waypoint,
regenerating (410, 412, 415) navigation information in the navigation system, based on the at least two waypoints and the current position when the current position reaches (408) one of a predetermined distance to the following waypoint and a predetermined distance to the following special waypoint,
wherein the navigation information is regenerated (410, 415) for the respective one of the following waypoint and the following special waypoint, and
wherein the navigation information is regenerated (412) in addition for the respective other of the following waypoint and the following special waypoint if the distance of the current position to the other of the following waypoint and the following special waypoint is smaller (409, 414) than the larger of the predetermined distance to the following waypoint and the predetermined distance to the following special waypoint,
and
outputting (411, 413, 416) at least a part of the regenerated navigation information in an acoustic, in particular voice-like, way.

2. Method according to claim 1,
wherein acoustic outputting of the regenerated navigation information takes place at the one predetermined distance in space or in time to the following waypoint or the following special waypoint.

3. Method according to claim 2,
wherein the distance in time is predetermined using an estimated velocity and the distance between the current position and the following waypoint or special waypoint.

4. Method according to one of the preceding claims,
further comprising the step of acoustic outputting navigation information on request (501).

5. Method according to one of the preceding claims,
wherein the step of regenerating navigation information comprises the step of updating (410, 412, 415, 505, 510, 508) the navigation information using updated position data.

6. Method according to one of the preceding claims,
wherein the acoustic outputting step comprises acoustic outputting of navigation information comprising at least one of current position data, a distance to a waypoint or special waypoint, a direction to the waypoint or the special waypoint, deviation information, an estimated arrival time at the waypoint or the special waypoint, and waypoint characteristics.

7. Method according to claim 6,
wherein acoustic outputting of the navigation information of the direction to the waypoint or the special waypoint is given relative to a predetermined direction, particularly, relative to the north and/or relative to a last moving direction of the navigation system.

8. Method according to claim 6,
wherein during the navigation information generating step, the distance to the following waypoint or following special waypoint is determined as the shortest distance and/or the distance following the track to the next waypoint.

9. Computer program product directly loadable into an internal memory of a digital computer, comprising software code portions for performing the steps of the method according to one of the claims 1 to 8.

10. Computer program product stored on a medium readable by a computer system comprising computer readable program means for causing a computer to perform the steps of the method according to one of the claims 1 to 8.

11. Navigation system, in particular, for performing the method according to one of the claims 1 to 8, comprising
input means configured for inputting (400) at least two waypoints which define a track,
waypoint selection means configured to externally select (401) at least one waypoint out of the at least two waypoints,
data storage means configured for storing the at least two waypoints,
data processing means configured for processing data and for providing navigation information, and
communicating means configured for communicating navigation information,
wherein the communicating means is configured such that navigation information is outputted at least partly in an acoustic, in particular voice-like, way when the navigation system is situated in an area for which the navigation system has no digitized road information,
**characterized in that**
the data processing means further comprises:
special waypoint identification means configured for identifying (404) at least one special waypoint having predetermined characteristics, and
decision taking means configured to generate (402) navigation information with respect to a first waypoint along the defined track and, if a first special waypoint is closer to a current position of the navigation system than the first waypoint, to additionally generate (406, 407) navigation information with respect to the first special waypoint,
wherein the decision taking means is further configured to regenerate (410, 412, 415) navigation information, based on the at least two waypoints and the current position when the current position reaches (408) one of a predetermined distance to the following waypoint and a predetermined distance to the following special waypoint,
wherein the navigation information is regenerated (410, 415) for the respective one of the following waypoint and the following special waypoint, and
wherein the navigation information is regenerated (412) in addition for the respective other of the following waypoint and the following special waypoint if the distance of the current position to the other of the following waypoint and the following special waypoint is smaller (409, 414) than the larger of the predetermined distance to the following waypoint and the predetermined distance to the following special waypoint.

12. Vehicle comprising a navigation system according to claim 11.

## Patentansprüche

1. Verfahren zum Unterstützen von Navigation in einem Bereich, für den keine digitalisierten Straßeninformationen vorliegen, folgende Schritte umfassend:
Bereitstellen (400) von wenigstens zwei Wegpunkten an ein Navigationssystem, die eine Strecke definieren,
Identifizieren (404) anhand der wenigstens zwei bereitgestellten Wegpunkte von wenigstens einem besonderen Wegpunkt durch das Navigationssystem, wobei jeder besondere Wegpunkt vorgegebene Eigenschaften aufweist,
**gekennzeichnet durch**
Generieren und Ausgeben (402, 405) von Navigationsinformationen in Bezug auf einen ersten Wegpunkt entlang der definierten Strecke und, wenn ein erster besonderer Wegpunkt näher an einer aktuellen Position des Navigationssystems ist als der erste Wegpunkt, zusätzliches Generieren und Ausgeben (406, 407) von Navigationsinformationen in Bezug auf den ersten besonderen Wegpunkt,
Regenerieren (410, 412, 415) von Navigationsinformationen in dem Navigationssystem auf Grundlage der wenigstens zwei Wegpunkte und der aktuellen Position, wenn die aktuelle Position eine von einer vorgegebenen Entfernung zu dem folgenden Wegpunkt und einer vorgegebenen Entfernung zum folgenden besonderen Wegpunkt erreicht (408),
wobei die Navigationsinformationen für den jeweiligen einen von dem folgenden Wegpunkt und dem folgenden besonderen Wegpunkt regeneriert werden (410, 415), und
wobei die Navigationsinformationen zusätzlich für den jeweiligen anderen von dem folgenden Wegpunkt und dem folgenden besonderen Wegpunkt regeneriert werden (412), wenn die Entfernung der aktuellen Position zum anderen von dem folgenden Wegpunkt und dem folgenden besonderen Wegpunkt kleiner ist (409, 414) als die größere der vorgegebenen Entfernung zum folgenden Wegpunkt und der vorgegebenen Entfernung zum folgenden besonderen Wegpunkt,
und
Ausgeben (411, 413, 416) von wenigstens einem Teil der regenerierten Navigationsinformationen in einer akustischen, insbesondere sprachartigen Weise.

2. Verfahren nach Anspruch 1,
wobei das akustische Ausgeben der regenerierten Navigationsinformationen bei der einen vorgegebenen räumlichen oder zeitlichen Entfernung zum folgenden Wegpunkt oder dem folgenden besonderen Wegpunkt stattfindet.

3. Verfahren nach Anspruch 2,
wobei die zeitliche Entfernung anhand einer geschätzten Geschwindigkeit und der Entfernung zwischen der aktuellen Position und dem folgenden Wegpunkt oder besonderen Wegpunkt vorgegeben wird.

4. Verfahren nach einem der vorangehenden Ansprüche,
ferner umfassend den Schritt des akustischen Ausgebens von Navigationsinformationen auf Anfrage (501).

5. Verfahren nach einem der vorangehenden Ansprüche,
wobei der Schritt des Regenerierens von Navigationsinformationen den Schritt des Aktualisierens (410, 412, 415, 505, 510, 508) der Navigationsinformationen mithilfe aktualisierter Positionsdaten umfasst.

6. Verfahren nach einem der vorangehenden Ansprüche,
wobei der Schritt des akustischen Ausgebens ein akustisches Ausgeben von Navigationsinformationen umfasst, die wenigstens eins von aktuellen Positionsdaten, einer Entfernung zu einem Wegpunkt oder besonderen Wegpunkt, einer Richtung zum Wegpunkt oder besonderen Wegpunkt, Abweichungsinformationen, einer geschätzten Ankunftszeit am Wegpunkt oder besonderen Wegpunkt und Wegpunkteigenschaften umfassen.

7. Verfahren nach Anspruch 6,
wobei das akustische Ausgeben der Navigationsinformationen der Richtung zum Wegpunkt oder besonderen Wegpunkt relativ zu einer vorgegebenen Richtung erfolgt, insbesondere relativ zur Nordrichtung und/oder relativ zu einer letzten Bewegungsrichtung des Navigationssystems.

8. Verfahren nach Anspruch 6,
wobei während des Schritts des Generierens der Navigationsinformationen die Entfernung zum folgenden Wegpunkt oder folgenden besonderen Wegpunkt als die kürzeste Entfernung und/oder die Entfernung unter Einhaltung der Strecke zum nächsten Wegpunkt bestimmt wird.

9. Computerprogrammprodukt, das direkt in einen internen Speicher eines digitalen Computers geladen werden kann und Softwarecodeabschnitte zum Ausführen der Schritte des Verfahrens nach einem der Ansprüche 1 bis 8 umfasst.

10. Computerprogrammprodukt, das auf einem von einem Computersystem lesbaren Medium gespeichert ist, umfassend ein computerlesbares Programmmittel, um einen Computer zu veranlassen, die Schritte des Verfahrens nach einem der Ansprüche 1 bis 8 auszuführen.

11. Navigationssystem, insbesondere zum Ausführen des Verfahrens nach einem der Ansprüche 1 bis 8, umfassend
ein Eingabemittel, das zum Eingeben (400) von wenigstens zwei Wegpunkten konfiguriert ist, die eine Strecke definieren,
ein Wegpunktauswahlmittel, das zum externen Auswählen (401) von wenigstens einem Wegpunkt der wenigstens zwei Wegpunkte konfiguriert ist,
ein Datenspeichermittel, das zum Speichern der wenigstens zwei Wegpunkte konfiguriert ist, ein Datenverarbeitungsmittel, das zum Verarbeiten von Daten und zum Bereitstellen von Navigationsinformationen konfiguriert ist,
ein Kommunikationsmittel, das zum Übermitteln von Navigationsinformationen konfiguriert ist,
wobei das Kommunikationsmittel derart konfiguriert ist, dass Navigationsinformationen wenigstens teilweise in einer akustischen, insbesondere sprachlichen Weise ausgegeben werden, wenn das Navigationssystem in einem Bereich angeordnet ist, für den das Navigationssystem keine digitalisierten Straßeninformationen aufweist,
**dadurch gekennzeichnet, dass**
das Datenverarbeitungsmittel ferner Folgendes umfasst:
ein Identifikationsmittel für einen besonderen Wegpunkt, das zum Identifizieren (404) von wenigstens einem besonderen Wegpunkt mit vorgegebenen Eigenschaften konfiguriert ist, und
ein Entscheidungsmittel, das dazu konfiguriert ist, Navigationsinformationen in Bezug auf einen ersten Wegpunkt entlang der definierten Strecke zu generieren (402) und wenn ein erster besonderer Wegpunkt näher an einer aktuellen Position des Navigationssystems ist als der erste Wegpunkt, zusätzliche Navigationsinformationen in Bezug auf den ersten besonderen Wegpunkt zu generieren (406, 407),
wobei das Entscheidungsmittel ferner dazu konfiguriert ist, Navigationsinformationen auf Grundlage von den wenigstens zwei Wegpunkten und der aktuellen Position zu regenerieren (410, 412, 415), wenn die aktuelle Position eine von einer vorgegebenen Entfernung zum folgenden Wegpunkt und einer vorgegebenen Entfernung zu dem folgenden besonderen Wegpunkt erreicht (408),
wobei die Navigationsinformationen für den jeweiligen einen von dem folgenden Wegpunkt und dem folgenden besonderen Wegpunkt regeneriert werden (410, 415), und
wobei die Navigationsinformationen zusätzlich für den jeweiligen anderen von dem folgenden Wegpunkt und dem folgenden besonderen Wegpunkt regeneriert werden (412), wenn die Entfernung der aktuellen Position zum anderen von dem folgenden Wegpunkt und dem folgenden besonderen Wegpunkt kleiner ist (409, 414) als die größere der vorgegebenen Entfernung zum folgenden Wegpunkt und der vorgegebenen Entfernung zum folgenden besonderen Wegpunkt.

12. Fahrzeug, umfassend ein Navigationssystem nach Anspruch 11.

## Revendications

1. Procédé d'aide à la navigation dans une zone pour laquelle aucune information numérisée de route n'est présente, comprenant les étapes suivantes :
l'utilisation (400) d'au moins deux points de cheminement vers un système de navigation, qui définissent une piste,
l'identification (404), parmi les au moins deux points de cheminement fournis, d'au moins un point de cheminement spécial par le système de navigation, chaque point de cheminement spécial ayant des caractéristiques prédéfinies,
**caractérisé par**
la production et la sortie (402, 405) d'informations de navigation par rapport à un premier point de cheminement le long de la piste définie et si un premier point de cheminement spécial est plus proche d'une position actuelle du système de navigation que le premier point de cheminement, la production et la sortie supplémentaire (406, 407) d'informations de navigation par rapport au premier point spécial de cheminement,
la nouvelle production (410, 412, 415) d'informations de navigation dans le système de navigation, en fonction des au moins deux points de cheminement et de la position en cours lorsque la position en cours atteint (408) soit une distance prédéfinie vers le point de cheminement suivant soit une distance prédéterminée vers le point de cheminement spécial suivant,
les informations de navigation étant produites (410, 415) pour le point respectif de cheminement suivant et pour le point de cheminement spécial suivant, et
les informations de navigation étant de nouveau produites (412) en plus pour l'autre point de cheminement suivant et pour le point de cheminement spécial suivant si la distance de la position actuelle vers l'autre parmi le point de cheminement suivant et le point de cheminement spécial suivant est plus petite (409, 414) que la plus grande entre la distance prédéterminée jusqu'au point de cheminement suivant et la distance prédéfinie jusqu'au point de cheminement spécial suivant, et
la sortie (411, 413, 416) d'au moins une partie des informations de navigation produites de nouveau d'une manière acoustique, en particulier à la manière d'une voix.

2. Procédé selon la revendication 1, dans lequel la sortie acoustique des informations de navigation produites de nouveau a lieu à la distance prédéfinie dans l'espace ou dans le temps vers le point de cheminement suivant ou vers le point de cheminement spécial suivant.

3. Procédé selon la revendication 2, dans lequel la distance dans le temps est prédéfinie à l'aide d'une vitesse estimée et de la distance entre la position en cours et le point de cheminement suivant ou le point de cheminement spécial.

4. Procédé selon l'une quelconque des revendications précédentes, comprenant en outre l'étape de sortie acoustique d'informations de navigation à la demande (501).

5. Procédé selon l'une quelconque des revendications précédentes, dans lequel l'étape de nouvelle production d'informations de navigation comprend l'étape de mise à jour (410, 412, 415, 505, 510, 508) des informations de navigation à l'aide des données de position mises à jour.

6. Procédé selon l'une quelconque des revendications précédentes, dans lequel l'étape de sortie acoustique comprend la sortie acoustique d'informations de navigation, comprenant au moins soit des données de position en cours, soit une distance jusqu'à un point de cheminement ou un point de cheminement spécial, une direction jusqu'au point de cheminement ou le point spécial de cheminement, des informations relatives à l'écart, une heure estimée d'arrivée au niveau du point de cheminement ou du point spécial de cheminement et les caractéristiques de point de cheminement.

7. Procédé selon la revendication 6, dans lequel la sortie acoustique des informations de navigation de la direction du point de cheminement ou du point de cheminement spécial est donnée par rapport à une direction prédéterminée, en particulier par rapport au nord et/ou par rapport à une dernière direction de déplacement du système de navigation.

8. Procédé selon la revendication 6, dans lequel pendant l'étape de production des informations de navigation, la distance au point de cheminement suivant ou au point de cheminement spécial suivant est déterminée comme la distance la plus courte et/ou la distance suivant la piste jusqu'au point de cheminement suivant.

9. Produit de type programme informatique chargeable dans une mémoire interne d'un calculateur numérique, comprenant des parties de code logiciel servant à effectuer les étapes du procédé selon l'une quelconque des revendications 1 à 8.

10. Produit de type programme informatique enregistré sur un support lisible par un système informatique comprenant un moyen de type programme lisible par ordinateur servant à amener un ordinateur à effectuer les étapes du procédé selon l'une des revendications 1 à 8.

11. Système de navigation, en particulier, servant à effectuer le procédé selon l'une quelconque des revendications 1 à 8, comprenant :
un moyen d'entrée conçu pour entrer (400) au moins deux points de cheminement qui définissent une piste,
un moyen de choix de point de cheminement conçu pour choisir en externe (401) au moins un point de cheminement parmi les au moins deux points de cheminement,
un moyen de stockage de donnés conçu pour enregistrer les au moins deux points de cheminement,
un moyen de traitement de données conçu pour traiter les données et pour fournir des informations de navigation, et
un moyen de communication conçu pour la communication des informations de navigation,
le moyen de communication étant conçu de sorte que les informations de navigation soient sorties au moins en partie d'une manière acoustique, en particulier de type voix, lorsque le système de navigation est situé dans une zone pour laquelle le système de navigation ne contient aucune information numérisée de route,
**caractérisé en ce que**
le moyen de traitement de données comprend en outre :
un moyen spécial d'identification de point de cheminement conçu pour identifier (404) au moins un point spécial de cheminement présentant des caractéristiques prédéfinies, et
un moyen de prise de décision conçu pour produire (402) des informations de navigation par rapport à un premier point de cheminement le long de la piste définie et, si un premier point spécial de cheminement est plus proche d'une position actuelle du système de navigation que le premier système de navigation, pour produire en outre (406, 407) des informations de navigation par rapport au premier point spécial de cheminement, le moyen de prise de décision étant en outre conçu pour produire de nouveau (410, 412, 415) des informations de navigation, en fonction des au moins deux points de cheminement et de la position en cours lorsque la position en cours atteint (408) soit une distance prédéterminée jusqu'au point de cheminement suivant, soit une distance prédéterminée jusqu'à un point spécial suivant,
les informations de navigation étant de nouveau produites (410, 415) pour le point de cheminement suivant et le point spécial suivant de cheminement, et
les informations de navigation étant de nouveau produites (412) en plus pour l'autre point de cheminement suivant respectif et pour le point de cheminement spécial suivant si la distance de la position en cours jusqu'à l'autre parmi le point de cheminement suivant et le point de cheminement spécial suivant est plus petite (409, 414) que la plus grande entre la distance prédéterminée jusqu'au point de cheminement suivant et la distance prédéterminée jusqu'au point de cheminement spécial suivant.

12. Véhicule comprenant un système de navigation selon la revendication 11.
